# EUROPEAN PATENT APPLICATION

(11) **EP 2 818 369 A2**
(43) Date of publication of application: **31.12.2014**
(21) Application number: 14173961.5
(22) Date of filing: 25.06.2014
(51) Int. Cl.: B60R 22/18

(54) **Improvements in or relating to seat belt assemblies**

(30) Priority: 27.06.2013 GB 201311440
(71) Applicant: Nissan Motor Manufacturing (UK) Ltd., Cranfield Bedfordshire MK43 0DB (GB)
(72) Inventor: Calvo Polanco, Juan Carlos, Cranfield, Bedfordshire MK430DB (GB)

(57) **Abstract**

A device (10) for use in a seat belt assembly. The device comprises a body defining supporting means for receiving and supporting a first seat belt buckle (12) and a second seat belt buckle (12) in a predetermined spaced relationship.

## Description

### Field of the invention

The invention relates to seat belt assemblies and, in particular, a device for managing the position of seat belt buckles in relation to seats of the vehicle.

### Background of the invention

Seat belt assemblies are a standard feature in most vehicles, and indeed their use is mandatory in automotive road vehicle for reasons of passenger safety. Many types of seat belt assemblies are known, for example, 2-point, sash, 3-point, Belt-in-Seat (BIS), and 4 to 7-point. Typically, a seat belt assembly includes at least one strap that can be wrapped around part of the user's body and a latch plate that latches the strap to a corresponding seat belt buckle thereby securing the strap around the user's body.

The seat belt buckle commonly has two main parts; a seat belt buckle and a webbing strap. The webbing strap serves to tether the seat belt buckle to an interior surface of the vehicle by way of an anchor secured to the free end of the webbing strap; typically the seat belt buckle will be tethered to the floor plan underneath the seat and the webbing strap will be long enough to protrude through a pocket in the seat cushion, or through the nip between seat units, so that the seat belt buckle can rest upon the seat thereby being accessible to the user of the seat.

Whilst seat belt buckles with webbing straps are relatively cost-effective and easy to install, they have some disadvantages. One significant drawback is that the webbing strap of one seat belt buckle can get tangled with webbing strap of an adjacent seat belt buckle, causing difficulties for the user. Also, due to the inherent flexibility of the webbing strap, the seat belt buckles simply lie flat on the seat cushion which can prove awkward for a user to engage the latch plate into the buckle, particularly using one hand. Furthermore, seat belt buckles mounted in this manner often become lost under the rear seat cushion and become difficult for a passenger to locate.

Rigid mounting schemes for seat belt buckles exist, and these ensure that the buckles remain upright at all times. However, such schemes can become an obstruction when the seat is folded and they are also more complex to manufacture and install therefore adding cost to the overall vehicle manufacture process.

It is against this background that the invention has been devised.

### Summary of the invention

In a first aspect, the invention provides a device for use in a seat belt assembly, the device comprising a body defining supporting means for receiving and supporting a first seat belt buckle and a second seat belt buckle in a predetermined spaced relationship.

The first and second seat belt buckles may be held in a variety of orientations relative to one another. However, in order to present both belt buckles in a uniform orientation it is currently preferred that the cavities are arranged so as to support the two buckles parallel, in a side-by-side arrangement.

The body therefore serves to support the first and second buckles and to brace them against adjacent seat units, or a corresponding seat pocket, so the buckles are presented rigidly for the user, thereby making it easier for a user to engage a latch plate into its associated buckle. Single-handed latching therefore becomes possible.

Since the first and second buckles are self-supporting and held in a predetermined spaced relationship, they are prevented from interfering with one another. Therefore, the associated webbing straps cannot be entangled and the buckles are prevented from knocking and rubbing against one another which could otherwise cause undesirable wear and damage to the buckles.

In order to receive and support the seat belt buckles, the body may take various forms; for example, the body may be provided with side-entry slots to enable the buckles to be inserted into the body. Currently preferred, however, if for the body to define first and second cavities, each of which is shaped for receiving a corresponding buckle, each cavity having an open upper end for receiving and supporting a respective seat belt buckle.

As the cavities have open upper ends, it is preferred that the lower ends of the cavities include suitable openings to allow a webbing strap associated with the buckles to pass through. In order to fix the buckles in position, it is currently preferred that the cavities each include an inwardly extending shoulder against which the buckle rests when inserted into the cavity. The buckle is therefore tensioned against the wall when the webbing strap is secured to the vehicle.

In one embodiment, the body includes a lobe which projects from the body and, preferably, which extends from an underside of the body. The lobe provides the advantage of being able to brace the device against the vehicle floor pan, or indeed another seat mounting surface, which provides added robustness to guard against the buckles being pushed into and below the seat units during use.

In one embodiment, the underside of the body includes a further cavity that extends inwards into the body between the first and second cavities and therefore establishes the wall that divides the body into the first and second cavities.

The benefit of this configuration is that the further cavity is able to accommodate a branch portion of a bifurcated webbing strap of a buckle assembly which guards against the seat belt buckle pulling out of its respective cavity. In this configuration, the branch portion of the webbing strap is received in the further cavity and so braces the buckle portion of the webbing strap from being pulled through the cavity.

The invention also resides in a seat belt buckle assembly comprising a seat belt buckle and a webbing strap, the webbing strap including a first end coupled to the seat belt buckle and a second end coupled to an anchor, the first end of the webbing strap being bifurcated to define first and second branch portions, only one of the branches being coupled to the seat belt buckle.

Although the ends of the branch portions may terminate in many different configurations, currently preferred is that respective ends of the first and/or second branches include a looped attachment end.

### Brief description of the drawings

For a fuller understanding, the invention will now be described, by way of example only, with reference to the following drawings in which:
Figure 1 is a perspective view of a vehicle seat assembly having a pair of close-coupled seat belt buckles;
Figure 2 is a perspective view of a device which supports the pair of seat belt buckles in a close-coupled relationship;
Figure 3 is a close up view of a pair of seat belt buckles supported by the device and shown *in-situ* in the vehicle seat assembly of Figure 1;
Figure 4 is a section view through the seat belt buckles in Figure 3; and
Figure 5 is an enlarged perspective view of a webbing strap for use with the seat belt buckles shown in Figures 2 to 4.

### Detailed description of the embodiments

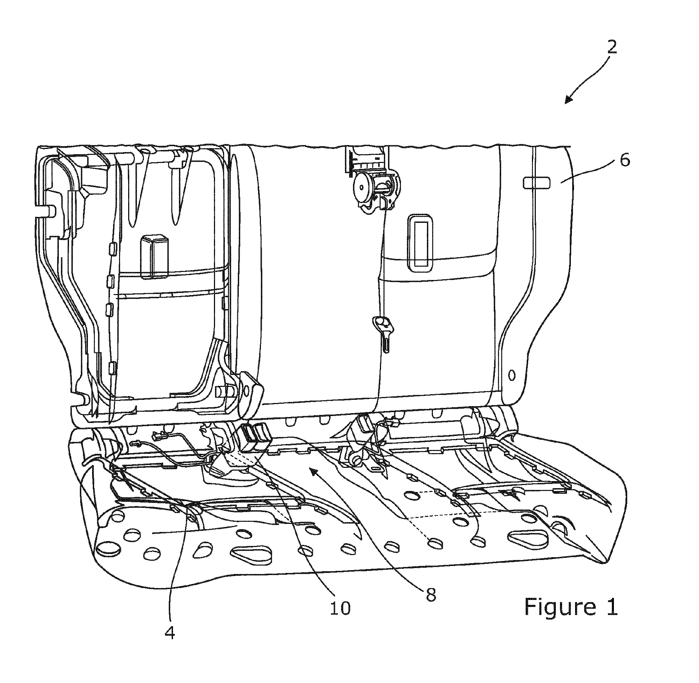

Figure 1 is a representation of a seat assembly 2 for a vehicle in which the invention is installed.

The seat assembly 2 includes a mounting platform 4 and a back rest cushion 6 that extends generally vertically, or slightly inclined to the vertical, from the mounting platform 4. It should be appreciated that a seat cushion is not shown in Figure 1 so as not to obscure details of the mounting platform 4 and fixtures mounted on it, the fixtures being indicated generally at 8.

One such fixture 8 is a device in the form of a boot device 10 having means to receive and support a pair of seat belt buckles 12. Figure 1 provides a general overview of the configuration of the boot device 10 relative to the seat assembly 2 and it can be seen that the pair of seat belt buckles 12 are held rigidly side-by-side in a generally parallel-spaced relationship. It will therefore be appreciated that this arrangement of positioning the seat belt buckles 12 *in situ* presents them so as to face outwards and inclined upwards at an angle from the seat cushion which is an ideal orientation from the point of view of the user.

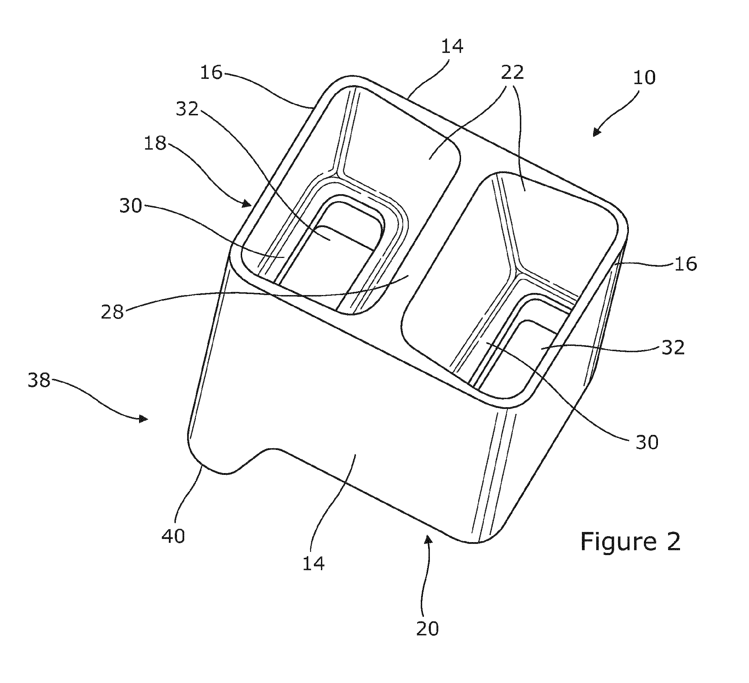

Turning now to Figure 2, which shows the boot device 10 in greater detail. The boot device 10 is generally cuboidal and so is defined by two pairs of parallel side faces, or walls 14, 16, an upper face, or 'top side' 18 and a lower face or 'underside' 20.

The boot device 10 in this embodiment is a polymeric moulded article and may be formed of any suitable engineering material such as rubber, polyethylene, or nylon to name two specific examples. In this embodiment, however, the boot device 10 is a thermoplastic elastomer with a hardness of 80 Shore A. Polymeric materials are currently preferred for their wide availability, for their strength characteristics and also since injection moulding techniques are well established and ideally suited to forming such articles. Of course, although polymeric materials are currently preferred, this does not preclude the boot device 10 being fabricated from other materials for example machined wood or metal.

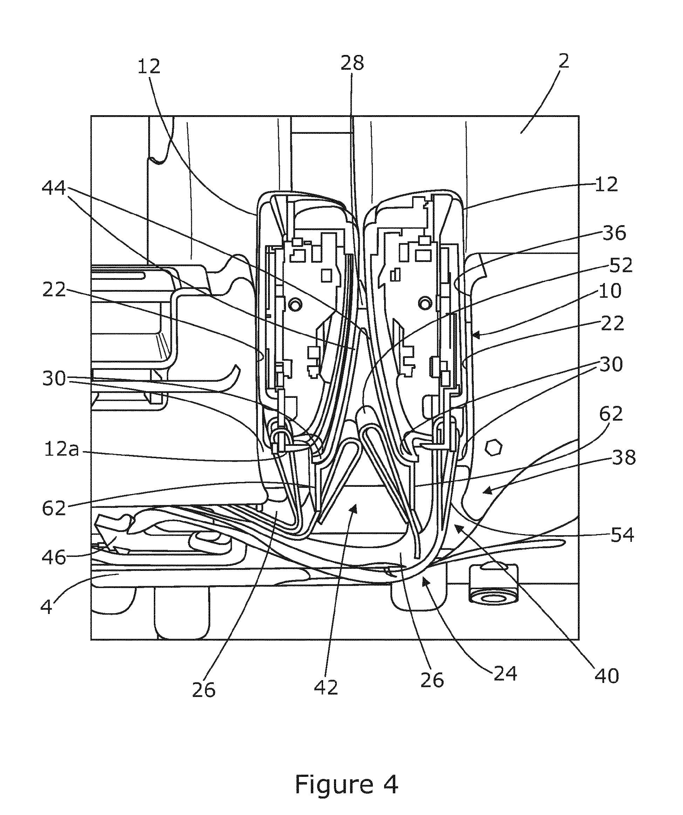

As has been mentioned, the boot device 10 is provided with supporting means to receive and support a first seat belt buckle 12 and a second seat belt buckle 12. The supporting means includes first and second cavities or pockets 22, the interior profiles of which are shaped to accommodate a respective one of the seat belt buckles 12. At this point it should be noted that the seat belt buckles 12 are not shown in Figure 2. However, the boot device 10 is shown in Figure 4, in cross section, fitted with a pair of seat belt buckle assemblies 24. Here, each seat belt buckle assembly 24 comprises a seat belt buckle 12 and a webbing strap 26 which, as is known in the art, is attached to a base 12a of the seat belt buckle 12 and is used to secure the seat belt buckle 12 to a surface, in this case the mounting platform 4.

Each cavity 22 has an open end which is generally trapezoidal in form, so as to match the lateral profile of the buckle 12. The cavities 22 are arranged side-by-side and therefore define a lateral wall 28 between them which separates the seat belt buckles 12 from one another and so prevents contact damage.

The interior profile of each cavity 22 is tapered and defines, at its lower end, an inwardly extending shoulder 30 that circumscribes an opening 32. The tapered profile of the cavities 22 is designed to match the outer profile of the seat belt buckles 12 and the shoulders 30 provides a lower seat on which a base of the seat belt buckle 12 rests. Figure 4 illustrates this more clearly than Figure 2, and it can be seen that the base of the seat belt buckle 12 rests on the shoulder 30 and the opening 32 provides an aperture through which extends the webbing strap 26 of the seat belt buckle assembly 24.

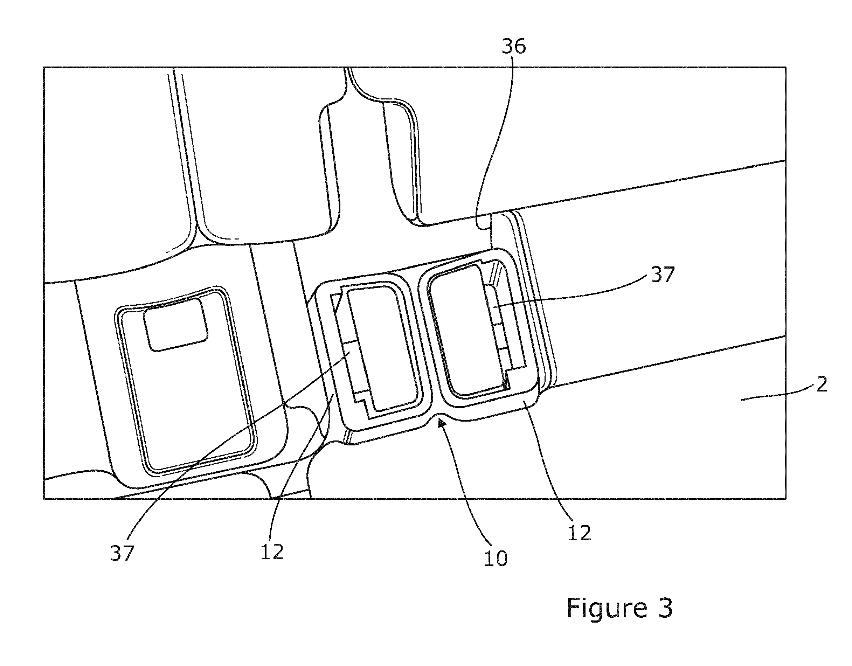

As shown in Figure 4, the dimensions of the boot device 10 are configured to fit within a pocket 36 of a seat assembly 2 in quite a tight fit so that edges of the seat pocket 36 grip the side walls 14,16 of the boot device 10. The gripping fit of the boot device 10 in the seat pocket 36 ensures that the seat belt buckles 12 are held securely with respect to the seat assembly 2 to provide the user with easy access to the seat belt buckles 12. This is also illustrated in Figure 3 where it can be seen that the seat belt buckles 12 are presented to the user in a helpful orientation as opposed to simply lying against the seat cushion. It therefore becomes possible for a user to engage a latch plate (not shown) into a latch slot 37 of the seat belt buckles 12 in a one-handed operation. It also improves the look and feel of the seat assembly 2 as a whole and provides an enhanced sense of quality.

Although the tight fit between the boot device 10 and the seat pocket 36 means that the boot device 10 is held quite tightly in position, the boot device 10 also includes rest means 38 which in this embodiment is in the form of a lobe 40 that extends downwards from the underside 20 and serves to brace the boot device 10 against the surface under the seat cushion when installed - this is shown in Figure 4. This strengthens the positioning of the boot device 10 within the seat pocket 36 and guards against the seat belt buckles 12 being pushed through the seat pocket 36 into the area under the seat assembly 2.

The lobe 40 may be provided only in one corner of the underside 20 of the boot device 10 or, for added strength, may extend across one side wall of the boot device 10.

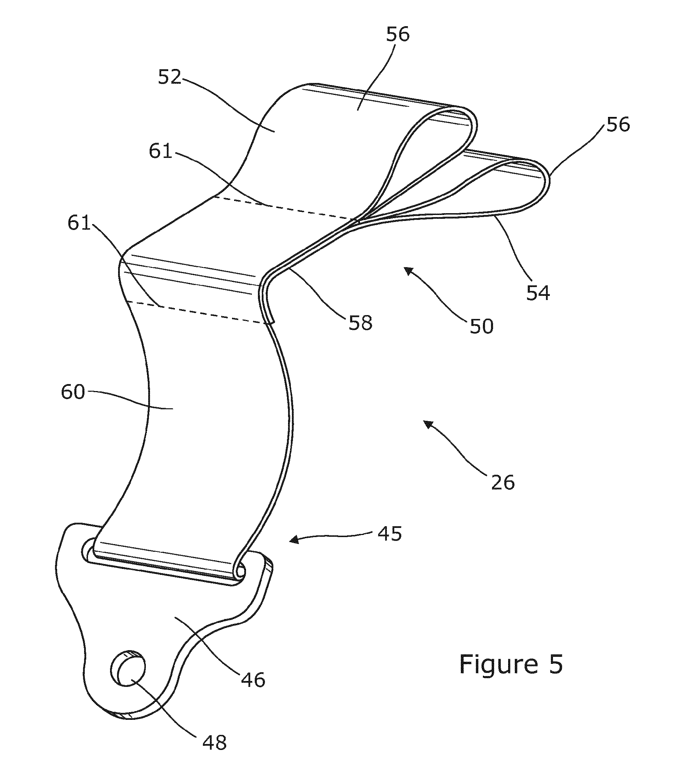

As well as including a feature to prevent the boot device 10 from being pushed into the seat pocket 36, a feature is also provided to prevent the seat belt buckles 12 from being pulled out of the boot device 10, as best illustrated in Figure 4, together with reference to Figure 5.

Here, the underside 20 of the boot device 10 is provided with a third cavity 42 that is defined by adjacent interior walls 44 of the first and second cavities 22 and so is located between the first and second cavities 22. The third cavity 42 serves to accommodate a portion of the webbing straps 26 of the seat belt buckle assemblies 24, one of which is shown in Figure 5.

The webbing strap 26 as shown in Figure 5 includes two ends: a first end 45 is attached to an anchor 46 for securing the webbing strap 26 to a vehicle surface via a fixing eyelet 48. A second end, indicated generally at 50, of the webbing strap 26 is attached to the seat belt buckle 12 (note that the seat belt buckle is not shown in Figure 5 for clarity). As is known in the art, but is not shown explicitly in the drawings, it should be noted that the webbing strap 26 is fabricated from a man-made woven material such as nylon, polyester or polypropylene.

The second end 50 of the webbing strap 26 is bifurcated so as to define first and second branch portions 52, 54. In this embodiment, each of the branch portions 52, 54 terminates in an attachment loop 56, such loops being an established means of coupling a webbing strap to a seat belt buckle.

The bifurcated webbing strap 26 could be created in various ways. For example, one way would be to fold a length of webbing in on itself multiple times to create successive branch portions. However, the preferred method, as illustrated in Figure 5, is to attach a relatively short webbing section 58 to a relatively long webbing section 60 at suitable lateral stitch lines 61 to create the first and second branch portions 52, 54.

Although not show in the figures, alternatively the bifurcation of the webbing strap 26 could be achieved by dividing a single section of strap into two parallel portions by a longitudinal slit.

The reason for the first and second branch portions 52, 54 becomes apparent in Figure 4. As is shown, the anchor 46 of the webbing strap 26 is secured to the mounting platform 4 of the vehicle and the other end of the webbing strap 26 is secured to seat belt buckle 12 using one of the branch portions 52. However, the other branch portion 54 is routed into the third cavity 42. Here, branch portions 54 of the webbing straps 26 of both seat belt buckle assemblies 24 are received in the third cavity 42 and are retained within the cavity 42 by downwardly extending walls 62 of the cavity 42. The downwardly extending walls 62 in effect, therefore, 'split' the bifurcated ends 52, 54 of the webbing strap 26 and grip onto the unattached branch portion 54 and so tether the seat belt buckle 12 into its respective cavity 22. It will therefore be appreciated that a combination of the dimensions of the boot device 10, the extending lobe 40 and the third cavity 42 hold the boot device 10 securely with respect to the seat assembly 2 and prevent the boot device 10 and the buckles 12 from being pushed down in to the seat assembly 2 or, alternatively, form being pulled out from the seat assembly 2. It should be noted that although the webbing strap 26 is described in this specific embodiment as comprising two branch portions 52, 54, the invention encompasses a webbing strap having more than two branch portions.

It should be noted that although the seat belt buckle assembly 24 is one of two that are used with the boot device 10 in Figures 1 to 4, the seat belt buckle assembly 24 could be used as a single unit.

Some specific embodiments of the invention have been described above. However, the skilled person will appreciated that various modifications may be made to the specific embodiments without departing from the inventive concepts as defined in the claims.

For example, although the branch portions 52, 54 are shown in this embodiment as both being provided with attachment loops 56, this is not essential and, instead, the 'free' branch portion 54 could simply be terminated with a stitched end, or instead and enlarged head so provide increased resistance against pulling of the seat belt buckle 12. Although the third cavity 42 provides a useful means to accommodate a free looped end 54 of the webbing strap 26, a similar result could be achieved with a smaller cavity or even with no cavity at all provided the free branch portion was designed accordingly to brace against the underside 20 of the boot device 10.

The boot device 10 has been described here as being generally cuboidal in form. However, its shape is driven largely by the need to fit snugly within a correspondingly-shaped seat pocket 36 and so it should be appreciated that the cuboidal outer profile of this embodiment is not essential to the invention and other profiles are conceivable.

## Claims

1. A device (10) for use in a seat belt assembly, the device comprising a body including supporting means for receiving and supporting a first seat belt buckle (12) and a second seat belt buckle (12) in a predetermined spaced relationship.

2. The device of claim 1, wherein the supporting means comprises a first cavity (22) and a second cavity (22) each having an open upper end for receiving and supporting a respective seat belt buckle.

3. The device of claim 2, wherein the first and second cavities are arranged side-by-side so as to position the first and second seat belt buckles (12) generally parallel to one another.

4. The device of claims 2 or 3, wherein the cavities (22) define at least one inclined sidewall.

5. The device of any of claims 2 to 4, wherein each of the first and second cavities (22) include lower openings (32) to allow passage of a webbing strap (26) associated with respective ones of the seat belt buckles (12).

6. The device of any of claims 2 to 5, wherein the cavities (22) each define an inwardly extending shoulder (30) to support a lower surface of a respective seat belt buckle (12).

7. The device of any of claims 2 to 6, wherein an underside of the device includes a further cavity that extends inwardly into the body.

8. The device of claim 7, wherein the further cavity extends inwardly between the first and second cavities.

9. The device of any of claims 1 to 8, wherein the body includes a lobe (40) which projects from the body.

10. The device of claim 9, wherein the lobe (40) extends from an underside of the body.

11. The device of any of the preceding claims, wherein the body is polymeric.

12. A seat belt buckle assembly comprising a seat belt buckle(12) and a webbing strap (26), the webbing strap including a first end coupled to the seat belt buckle (12) and a second end coupled to an anchor, the first end of the webbing strap being bifurcated to define first and second branch portions (52, 54), only one of the branches being coupled to the seat belt buckle.

13. The seat belt buckle assembly of claim 12, wherein respective ends of the first and/or second branch portions (52, 54) terminate in an attachment loop (56).

14. The seat belt buckle assembly of claim 12 or claim 13, wherein the first and second branch portions (52, 54) are formed from separate sections of webbing (26).
